# EUROPÄISCHE PATENTSCHRIFT

(11) **EP 3 479 447 B1**
(45) Veröffentlichungstag und Bekanntmachung des Hinweises auf die Patenterteilung: **07.09.2022**
(21) Anmeldenummer: 17742943.8
(22) Anmeldetag: 30.06.2017
(51) Int. Cl.: H02G 3/22, F16L 5/02

(54) **KABELWANDDURCHFÜHRUNG UND BAUSATZ**
WALL DUCT FOR CABLES AND ASSEMBLY
TRAVERSÉE MURALE POUR CÂBLES ET JEU DE PIÈCES

(30) Priorität: 30.06.2016 DE 202016103494 U
(43) Veröffentlichungstag der Anmeldung: 08.05.2019
(73) Patentinhaber: CONTA-CLIP Verbindungstechnik GmbH, 33161 Hövelhof (DE)
(72) Erfinder: NOWASTOWSKI-STOCK, Jörg, 32760 Detmold (DE)
(74) Vertreter: Bittner, Thomas L.
(86) Internationale Anmeldenummer: PCT/DE2017/100551
(87) Internationale Veröffentlichungsnummer: WO 2018/001419

(56) Entgegenhaltungen:
- EP-A1- 1 744 425
- EP-A2- 2 106 006
- DE-C1- 4 340 343
- DE-U1-202015 102 280

## Beschreibung

Die Erfindung betrifft eine Kabelwanddurchführung und einen Bausatz für eine Wanddurchführung von Kabeln.

### Hintergrund

Wanddurchführungen für Kabel, die auch als Kabeldurchführungen bezeichnet werden können, dienen dazu, Kabel durch eine Wand hindurch von einer Seite zur anderen Seite zu führen. Solche Wanddurchführungen finden insbesondere Anwendung in Verbindung mit der Durchführung von Kabeln durch eine Gehäusewand eines Gerätes oder Schranks, zum Beispiel eines Schaltschranks. Derartige Wanddurchführungen können eine Abdichtung vorsehen, zum Beispiel zum Dichten gegen das Eindringen von Feuchtigkeit und Schmutz.

Wanddurchführungen können ein Gehäuse aus Kunststoff aufweisen, welches als Spritzgussbauteil hergestellt ist. Bei dieser oder anderen bekannten Ausführungen verfügt das Gehäuse über einen Gehäusedurchbruch, der einem Wanddurchbruch gegenüberliegend angeordnet ist, durch welchen hindurch die Kabel zu führen sind.

Aus dem Dokument DE 32 24 977 A1 ist eine von einem Einschnitt einer Wandung aufgenommene Kabeltülle zur dichten Durchführung eines Kabels oder Kabelsatzes durch eine Wandung bei Kraftfahrzeugen bekannt. Die Kabeltülle hat einen gelochten Grundkörper mit einstückig sich anschließender kegelstumpfförmiger Verlängerung, deren endseitige Manschette sich dichtend am Kabel abstützt. Der Grundkörper ist regelmäßig viereckig, zum Beispiel quadratisch. Die Kabeltülle weist äußere Schmalflächen auf, deren dem Einschnitt zugeordnete Bereiche über Nut- und Federverbindungen gehalten sind. Der Einschnitt nimmt mehrere solcher Kabeltüllen auf, deren aneinandergrenzende Schmalflächen ebenfalls über Nut- und Federverbindungen ineinandergreifen. So weist der Grundkörper zum Beispie! im Bereich zweier zueinander etwa paralleler äußerer Begrenzungskanten und in einer dritten, beide verbindenden und dazu etwa rechtwinkligen Begrenzungskante jeweils in die dortige Schmalfläche eingetiefte Nuten auf. Im Bereich der vierten Begrenzungskante trägt der Grundkörper eine nach außen vorstehende Zunge, die bei aneinanderfügen mehrerer Kabeltüllen in eine Nut einer benachbarten Kabeltülle eingreifen.

Das Dokument DE 102 25 046 A1 betrifft eine Vorrichtung zum Verbinden einer Kabeldurchführung mit einem Wanddurchbruch. Die Vorrichtung umgibt den Wanddurchbruch allseitig und ist mit der Wand dicht und ortsfest verbindbar. Die Vorrichtung besitzt mindestens eine durchgehende Öffnung für Kabel und ist mit der Kabeldurchführung ortsfest und dichtverbindbar. Es ist mindestens ein Rastkörper vorgesehen, um die Kabeldurchführung mit der Vorrichtung lösbar verbinden zu können.

Im Dokument DE 10 2013 201 149 A1 ist eine Kabeldurchführungseinrichtung offenbart, die einen Dichtungsträger aufweist, weicher eine Kabeldurchführungsöffnung zur Anordnung einer Kabeldichtung aufweist. Der Dichtungsträger und die Kabeldichtung weisen eine sich parallel zu einer Kabeldurchführungsrichtung erstreckende Trennebene auf, wobei ein Verschraubungselement vorgesehen ist, das zur Anlage der Kabeldichtung gegen ein in der Kabeldurchführungsöffnung angeordnetes Kabel mit dem Dichtungsträger verschraubbar ist.

Aus dem Dokument DE 20 2004 006 065 U1 ist eine Einrichtung zum Durchführen mehrerer Leitungen bekannt, insbesondere eines Kabelbündels durch eine dampf- / luftdichte und / oder brandsichere Schicht.

Eine Kabeldurchführung ist in dem Dokument EP 1 236 256 B1 offenbart. Eine weitere Vorrichtung zum Durchführen von Kabeln beschreibt das Dokument DE 10 2007 060 100 A1 .

Eine Kabeldurchführung für eine Gehäusewandung, insbesondere eine Wand oder Decke eines Verteilschrankes oder Zählerkastens, ist im Dokument EP 1 363 376 A1 offenbart.

Im Dokument EP 2 106 006 A2 ist eine Kabelwanddurchführung offenbart, die aus zwei Einzelplatten besteht, nämlich einer ersten Platte und einer zweiten Platte die zusammen geklippst sind. Die Dokumente DE 20 2015 102280 U1, EP 1 744 425 A1 und DE 43 40 343 C1 offenbaren weitere Kabelwanddurchführungen.

### Zusammenfassung

Aufgabe der Erfindung ist es, eine verbesserte Kabelwanddurchführung sowie einen Bausatz anzugeben, die eine flexible Anpassung an unterschiedliche Anwendungssituationen ermöglichen. Insbesondere soll eine Anpassbarkeit an unterschiedliche Einbausituationen geschaffen werden.

Zur Lösung ist eine Kabelwanddurchführung nach dem unabhängigen Anspruch 1 geschaffen.

Weiterhin ist ein Bausatz für eine Wanddurchführung von Kabeln nach dem abhägigen. Anspruch 13 vorgesehen. Ausgestaltungen sind Gegenstand von abhängigen Unteransprüchen.

Nach einem Aspekt ist eine Kabelwanddurchführung geschaffen, die ein Gehäusebauteil aufweist. Das Gehäusebauteil ist an einer Gehäusewand im Bereich eines Wanddurchbruchs mon∼ tierbar und weist eine Ausnehmung zum Hindurchführen von Kabeln durch das Gehäusebauteil auf. Die Kabelwanddurchführung verfügt über Stege, die einstückig an dem Gehäusebauteil angeformt sind. Mit den Stegen sind in der Ausnehmung mehrere mittels der Stege getrennte Öffnungen gebildet, wobei die Öffnungen eingerichtet sind, jeweils ein oder mehrere Dichtungselemente aufzunehmen, mit denen eine Kabeldurchführung für wenigstens eines der Kabel hergestellt ist. Die Kabelwanddurchführung weist ein Verschlussbauteil auf, welches zumindest eine der Öffnungen verschließt und über eine oder mehrere Sollbruchstelien an dem Gehäusebauteil und / oder den Stegen angeordnet ist.

Nach einem weiteren Aspekt ist ein Bausatz für eine Wanddurchführung von Kabeln geschaffen, weiche eine Kabelwanddurchführung sowie ein oder mehrere Rasterbauteile aufweist. Die Rasterbauteile sind eingerichtet, in einer Öffnung einer Ausnehmung eines Gehäusebauteils der Kabelwanddurchführung angeordnet zu werden, um in der zugeordneten Öffnung getrennte Aufnahmen für Dichtungselemente auszubilden. Weiterhin sind ein oder mehrere Dichtungselemente vorgesehen, mit denen eine Kabeldurchführung für wenigstens eines der Kabel herstellbar ist.

In Abhängigkeit von der Einbausituation für die Kabelwanddurchführung können die in der Ausnehmung angeordneten Öffnungen, von denen zunächst wenigstens ein Teil mit einem jeweiligen Verschlussbauteil verdeckt ist, entfernt werden, indem das jeweilige Verschlussbauteil mittels Trennen der einen oder der mehreren Sollbruchstelien vom Gehäusebauteil und / oder den Stegen gelöst wird. Auf diese Weise können eine oder mehrere ursprünglich verschlossene Öffnungen freigegeben werden, um anwendungsabhängig Kabeldurchführungen auszubilden, indem insbesondere ein oder mehrere Dichtungselemente hierin angeordnet werden, die ihrerseits ein oder mehrere Kabel dichtend durch die Gehäusewand führen.

Das Verschlussbauteil, welches in einer alternativen Ausführung als Flanschplatte ausgeführt sein kann, kann bei dieser oder anderen Ausführungsformen auf der Außen- oder der Innenseite der Gehäusewand im Bereich des Wanddurchbruchs angeordnet werden. Eine innenseitige Montage kann zum Beispiel beim Ausbilden der Kabelwanddurchführung im Bodenbereich vorgesehen sein.

Die Öffnungen in dem Verschlussbauteil können runde oder eckige Öffnungen sein, wobei ein Verschlussbauteil vorgesehen sein kann, welches sowohl wenigstens eine runde wie auch wenigstens eine eckige Öffnung aufweist, die anfänglich verschlossen sind.

Die mittels der Stege gebildeten Öffnungen stellen Aufnahmen für die Dichtungselemente bereit, in die diese eingesetzt werden können, um die Kabel dichtend hindurchzuführen.

In einer Ausführungsform können das Gehäusebauteil und die Stege als ein äußerer und ein innerer Rahmen gebildet sein.

Die mittels der Stege in der Ausnehmung des Gehäusebauteils getrennt gebildeten Öffnungen können hinsichtlich der Öffnungsfläche einen runden oder einen eckigen Querschnitt aufweisen. Gleiches gilt für die Verschlussbauteile, die die jeweilige Öffnung bedecken.

Das einer Öffnung zugeordnete Verschlussbauteil kann diese fluiddicht abschließen. Alternativ kann zwischen dem Rand des Verschlussbauteils und einem gegenüberliegenden Rand der Öffnung wenigstens abschnittsweise ein Spalt angeordnet sein. Zugeordnete Sollbruchstellen können bei dieser oder anderen Ausführungsformen innenliegend ausgebildet sein, also auf einer Rückseite des Verschlussbauteils, die bei der Montage des Gehäusebauteils an der Gehäusewand dem Gehäuse zugewandt ist.

Mithilfe der Kabelwanddurchführung kann in einer Ausgestaltung eine Anordnung mit einer Wanddurchführung für mehrere Kabel geschaffen werden, welche eine Wand mit einem Wanddurchbruch aufweist, durch welche hindurch mehrere Kabel hindurchgeführt werden. Die Wand kann aus unterschiediichen Materialien bestehen, beispielsweise Kunststoff oder Metall. in einer Ausführungsform kann es sich um eine Wand aus Blech handeln. Die Wanddurchführung weist das Gehäusebauteil auf, welches auf einer Seite an der Gehäusewand angeordnet ist, derart, dass die am Gehäusebauteil gebildete Ausnehmung dem Wanddurchbruch gegenüberliegend angeordnet ist. Mehrere Kabel verlaufen jeweils durch den Wanddurchbruch und die Ausnehmung sowie ein zugeordnetes Dichtungselement hindurch. Die jeweils zugeordneten Dichtungselemente sind in der Ausnehmung des Gehäusebauteils das jeweilige Kabel umlaufend abdichtend angeordnet. In der Ausnehmung des Gehäusebauteils der Kabelwanddurchführung sind mithilfe eines oder mehrerer Rasterbauteile getrennte Aufnahmen für jeweils ein oder mehrere Dichtungselemente gebildet, in welchen die die Kabel aufnehmenden und abdichtenden Dichtungselemente angeordnet sind. Das oder die Rasterbauteile sind nach dem Anordnen des Gehäusebauteils an der Wand von einer gegenüberliegenden Seite der Wand, bei der es sich zum Beispiel um eine Innenseite handeln kann, durch den Wanddurchbruch hindurch in der Ausnehmung des Gehäusebauteils und dort in dem Bereich des Gehäusedurchbruchs eingeführt.

Die Kabelwand- oder Wanddurchführung, insbesondere hinsichtlich der Kabeldichtung, kann der Schutzart IP65 nach EN60529 entsprechen. Unabhängig vom Erfüllen dieses Standards kann die Abdichtung bei den verschiedenen Ausgestaltungen wenigstens einen Feuchtigkeits- und Schmutzschutz bereitstellend ausgeführt sein.

Das Verschlussbauteil kann mehrstückig mit mehreren Teilverschlussbauteilen gebildet sein, die über zugeordnete Sollbruchstelien verbunden sind und jeweils einen Teilbereich der zumindest einen Öffnungen verschließen. Bei dieser Ausführungsform kann die eine einem Verschlussbauteil zugeordnete Öffnung nur teilweise oder Stück für Stück freigelegt werden, indem ein oder mehrere Teilverschlussbauteile mittels Abtrennen entfernt werden.

Das Verschlussbauteil kann als eine Verschlussplatte ausgeführt sein. Bei dieser oder anderen Ausführungsformen können das Gehäusebauteil und die Verschlussbauteile als Spritzgussbauteil ausgeführt sein, sei es mittels Ein- oder Zwei-Komponenten Spritzgießen.

Die mehreren Sollbruchstellen können entlang eines umlaufenden Rands des Verschlussbauteils verteilt angeordnet sein. Die mehreren Sollbruchstellen können mittels äquidistant beabstandeter Verbindungen entlang des umlaufenden Rands des Verschlussbauteils gebildet sein. Unabhängig vom gewählten Abstand zwischen benachbarten Verbindungen der Sollbruchstellen können diese in den verschiedenen Ausführungsformen als Spritzgussverbindungen ausgebildet sein.

Das Gehäusebauteil kann mit einer Flanschplatte gebildet sein, welche um die Ausnehmung herum gebildet ist. Die Flanschplatte kann Bohrungen aufweisen, die beim Montieren des Gehäusebauteils an der Gehäusewand zum Aufnehmen von Befestigungsmitten dienen.

Die Stege können einen Randsteg aufweisen, welcher um die Ausnehmung umlaufend gebildet ist. Der Randsteg kann umlaufend durchgehend oder unterbrochen gebildet sein. Der Randsteg kann entlang des umlaufenden Rands der Ausnehmung am Gehäusebauteil verlaufen.

Die Stege können Zwischenstege aufweisen, welche zum Ausbilden der Öffnungen innerhalb der Ausnehmung angeordnet sind. Die Zwischenstege können hinsichtlich einer Steghöhe und / oder einer Stegwanddicke gleich dem Randsteg ausgebildet sein. Alternativ können sich die Zwischenstege hinsichtlich der Steghöhe und / oder der Stegwanddicke von dem Randsteg unterscheiden.

Zumindest ein Teil der Stege kann von einer Gehäusemontageoberfiäche des Gehäusebauteils vorstehend ausgebildet sein. Mit der Gehäusemontageoberfläche kann das Gehäusebauteil beim Montieren auf der Außen- oder der Innenseite des Gehäuses aufliegen, in welchem der Gehäusewanddurchbruch gebildet ist. Der Randsteg kann in den Gehäusewanddurchbruch eingesteckt sein. Wahlweise kann der Randsteg auf der Innenseite / Außenseite der Gehäusewand zum Innenraum / Außenraum hin vor- oder überstehen. Der Randsteg und die Zwischenstege können von der Gehäusemontageoberfläche des Gehäusebauteils mit gleicher Bauhöhe vorstehen. Alternativ kann vorgesehen sein, dass das Vorstehen für den Randsteg einerseits und die Zwischenstege andererseits mit unterschiedlicher Bauhöhe ausgebildet ist. Der Randsteg und / oder die Zwischenstege können auf der Gegenseite des Gehäusebauteils, also der vom Gehäuse abgewandten Seite des Gehäusebauteils, nicht über- oder vorstehend ausgeführt sein.

Die Stege können Montageaufnahmen aufweisen, die eingerichtet sind, ein oder mehrere Rasterbauteile für eine Montage in einer zugeordneten Öffnung aufzunehmen, um in der zugeordneten Öffnung getrennte Aufnahmen für Dichtungselemente auszubilden. Mittels der Montageaufnahmen können das eine oder die mehreren Rasterbauteile lösbar an den Stegen angeordnet sein.

In einer Öffnung können mehrere Rasterbauteile angeordnet sein, bei denen einander zugeordnete Oberflächenabschnitte benachbarter Rasterbauteile dichtend aufeinanderliegen. Alternativ kann in einer Öffnung nur ein einziges Rasterbauteil angeordnet sein, um wenigstens zwei Aufnahmen für Dichtungselemente herzustellen. Die mehreren Rasterbauteile können mit gleicher Bauhöhe wie die sie umgebenden Stege ausgebildet sein. An den einander zugeordneten Oberflächenabschnitten der benachbarten Rasterbauteile können Montageaufnahmen vorgesehen sein, die gleich den Montageaufnahmen an den Stegen ausgebildet sind. Auf diese Weise können zwischen den aneinander zugeordneten Oberflächenabschnitten der benachbarten Rasterbauteile dichtende Verbindungen ausgebildet werden, vergleichbar den dichtenden Verbindungen zwischen den Stegen und den Rasterbauteilen.

Bei den mehreren Rasterbauteilen kann eine Stirnfläche eines Teilstegs eines der Rasterbauteile dichtend auf einer Seitenfläche eines Teilstegs, insbesondere auf einer Längsseite des Teilstegs, eines benachbarten Rasterbauteils angeordnet sein. Beispielsweise können die Teilstege horizontal und vertikal verlaufen.

Die Rasterbauteile können gekreuzte und / oder nicht gekreuzte Rasterbauteile aufweisen. Im Fall gekreuzter Rasterbauteile können Rasterbauteilstege quer zueinander verlaufen, beispielsweise im rechten Winkel.

Es kann ein Verfahren zum Herstellen einer Wanddurchführung für mehrere Kabel ausgeführt werden, wobei das Verfahren die folgenden Schritte aufweist: Bereitstellen einer Wand mit einem Wanddurchbruch; Anordnen eines Gehäuses oder eines Gehäusebauteils einer Kabelwand- oder Wanddurchführung auf einer Seite an der Wand, derart, dass ein am Gehäuse gebildeter Gehäusedurchbruch, der eine Ausnehmung bildet, dem Wanddurchbruch gegenüberliegend angeordnet ist; Anordnen wenigstens eines Rasterbauteils in einem Aufnahmeraum (Ausnehmung) des Gehäuses, wobei das wenigstens eine Rasterbauteil nach dem Anordnen des Gehäuses oder Gehäusebauteils an der Wand von einer gegenüberliegenden Seite der Wand durch den Wanddurchbruch hindurch in dem Aufnahmeraum und dort in dem Bereich des Gehäusedurchbruchs eingeführt wird und hierin getrennte Aufnahmen für jeweils ein oder mehrere Dichtungselemente bereitstellt; und Anordnen von mehreren Dichtungselementen in den getrennten Aufnahmen, wobei mehrere Kabel vorgesehen sind, die jeweils durch den Wanddurchbruch und den Gehäusedurchbruch sowie ein zugeordnetes Dichtungselement hindurch verlaufen, welches in der zugeordneten Aufnahme das jeweilige Kabel umlaufend abdichtend angeordnet ist.

Eine Befestigung des Gehäuses oder Gehäusebauteils an der Wand mit dem Wanddurchbruch kann zum Beispiel mit Hilfe einer oder mehrerer Schrauben erfolgen. Alternativ oder ergänzend kann zum Befestigen beispielsweise ein Aufrasten vorgesehen sein.

Das Raster- oder Gitterbauteil kann zum Beispiel mittels Klemmen und / oder Rasten in dem Aufnahmeraum des Gehäuses oder Gehäusebauteils befestigt werden.

Die Dichtungselemente können mit einer oder mehreren Kabeltüllen gebildet sein. Sie können aus einem elastischen Material bestehen, welches auf Druck elastisch nachgibt, beispielsweise einem Gummimaterial. Die Dichtungselemente können ein- oder mehrteilig ausgeführt sein. Im Fall einer einteiligen Ausführung kann ein sich vom äußeren Rand zu einer Kabeldurchführung hin erstreckender Schlitz oder Schnitt vorgesehen sein, welcher ein Öffnen des Dichtungselements ermöglicht, beispielsweise zum Einschieben eines Kabels von der Seite entlang des Schlitzes. Die Dichtungselemente können wenigstens zum Teil als ein Hohlkörper mit einem inneren und / oder einem äußeren Hohlraum oder als Vollmaterialkörper ausgebildet sein.

Das Gehäuse oder Gehäusebauteil der Wanddurchführung kann einteilig oder mehrteilig ausgeführt sein.

Das Rasterbauteil kann als Bauteil mit einem Gitter (Gitterbauteil) ausgeführt sein, das mittels Stegen gebildet ist, welche die jeweiligen Aufnahmen teilweise oder vollständig umgreifen. Ein Teil der Stege kann unterbrochen ausgebildet sein.

In zumindest einem Teil der getrennten Aufnahmen kann genau ein Dichtungselement angeordnet sein. Ebenso kann eine Öffnung der Aufnahme nur eines Dichtungselements dienen. Es kann in sämtlichen Aufnahmen nur genau ein Dichtungselement angeordnet sein. Das jeweilige Dichtungselement kann ein oder mehrere Kabel abdichtend aufnehmen. In einer Ausführung ist in jeder Aufnahme genau ein Dichtungselement angeordnet, weiches genau ein Kabel aufnimmt.

In zumindest einem Teil der getrennten Aufnahmen, die in den Öffnungen gebildet sind, können mehrere Dichtungselemente angeordnet sein. Die mehreren Dichtungselemente können die Aufnahme, in weicher sie gemeinsam angeordnet sind, vollständig ausfüllen.

Die Dichtungselemente können beim Einführen in die Aufnahme das Kabel selbsttätig klemmend und umlaufend dichtend ausgeführt sein. Hierbei können die Dichtungselemente zumindest in einer Montagestellung, in welcher sie im Wesentlichen vollständig in der zugeordneten Aufnahme angeordnet sind, druckbeaufschlagt sein, sei es durch das Rasterbauteil und / oder das Gehäuse der Wanddurchführung. Bei dieser oder anderen Ausführungsformen kann die umlaufende Abdichtung des Kabels am Dichtungselement mit Hilfe einer Dichtungslippe ausgebildet sein, die im montierten Zustand auf der äußeren Oberfläche des Kabels unterbrochen oder durchgehend angeordnet ist. Es können mehrere umlaufende Dichtungslippen vorgesehen sein. Mittels der mehreren Dichtungslippen, also wenigstens zwei Dichtungslippen, kann ein dem Kabel beim Durchziehen entgegengesetzter Reibungswiderstand anwendungsabhängig bestimmt werden. So können zum Erreichen eines gewünschten Durchzugwiderstands wenigstens drei oder wenigstens fünf Dichtungslippen vorgesehen sein.

Die selbsttätige Klemm- und Dichtwirkung kann zunehmen je weiter das Dichtungselement in die Aufnahme eingeschoben ist. Die selbsttätige Klemm- und Dichtwirkung kann auf einem Einschiebeabschnitt in die Montagestellung hin kontinuierlich zunehmend ausgebildet sein.

Die Dichtungselemente können in den Aufnahmen lösbar aufgenommen sein. Das lösbare Aufnehmen kann beispielsweise dadurch ausgeführt sein, dass die Dichtungselemente in die zugeordnete Aufnahme eingesteckt oder eingeschoben sind. Die lösbare Aufnahme kann eine mehrfache Montage sowie Demontage der Dichtungselemente in den Aufnahmen ermöglichen.

Die Dichtungselemente und / oder die Aufnahmen können konisch ausgeführt sein. Zum Beispiel können die Dichtungselemente und / oder die Aufnahmen einen Kegelstumpfform aufweisen. In Verbindung mit dem Rasterbauteil kann vorgesehen sein, dass die Aufnahmen umgebende Stege im Querschnitt konisch ausgebildet sind. Die Neigung relativ zur jeweiligen Mittellinie des konischen Verlaufs für die Dichtungselemente einerseits und die Aufnahmen andererseits können verschieden sind.

Eine Außenfläche der Dichtungselemente und / oder eine Innenfläche der Aufnahmen kann eine Oberflächenstrukturierung aufweisen. Die Oberflächenstrukturierung kann die Reibung zwischen der Außenfläche des Dichtungselements und der Innenfläche der Aufnahme erhöhend ausgeführt sein. Komplementäre Oberflächenstrukturierungen können auf sich in der Montagestellung der Dichtungselemente gegenüberliegende Flächenabschnitten der Außenfläche des Dichtungselements und der Innenfläche der Aufnahme vorgesehen sein.

Die Dichtungselemente können auf einer proximalen und / oder auf einer distalen Stirnfläche eine randseitige Dichtlippe aufweisen, die zumindest abschnittsweise auf einer Stirnfläche des Rasterbauteils angeordnet sind. Die randseitige Dichtlippe überlappt hierbei zumindest abschnittsweise mit einer Stirnfläche des Rasterbauteils. Ist in einer Ausführungsform, bei der die Abdeckung auf der gegenüberliegenden Seite der Wand vorgesehen ist, kann die Abdeckung die randseitige Dichtlippe gegen die Stirnfläche drücken, wodurch eine zusätzliche Dichtwirkung entfaltet werden kann.

Die Stirnfläche des Rasterbauteils kann zumindest abschnittweise freiliegend gebildet sein. Die Stirnfläche des Rasterbauteils kann so bei montierter Wanddurchführung von einer oder beiden Seiten der Wand, in welcher der Wanddurchbruch gebildet ist, einsehbar sein.

Das Rasterbauteil kann lösbar in dem Gehäuse oder Gehäusebauteil angeordnet sein. Eine lösbare Verbindung kann zum Beispiel als Rastverbindung oder Klemmverbindung ausgeführt sein. Alternativ zur lösbaren Verbindung kann eine nicht lösbare Verbindung des Rasterbauteils nach dessen Einführen in dem Gehäuse vorgesehen sein, also insbesondere eine Verbindung, die nur mittels teilweiser Zerstörung der beteiligten Bauteile wieder trennbar ist.

Ein den Gehäusedurchbruch umgebender Rand kann zumindest abschnittweise auf der Stirnfläche randseitiger Dichtungselemente aufliegen. Beispielsweise kann ein sich nach innen erstreckender oder vorstehender Rand des Gehäuses auf der Stirnfläche randseitiger Dichtungselemente aufliegen, die im Gehäuse der Wanddurchführung angeordnet sind.

Das Rasterbauteil kann einstückig ausgeführt sein, Alternativ kann das Rasterbauteil mehrteilig ausgeführt sein, beispielsweise mit mehreren Gitterbauteilen, die einzeln in den Aufnahmeraum des Gehäuses einführbar sind, um dort wahlweise miteinander verbunden zu werden, beispielsweise mittels einer Rast- oder einer Steckverbindung. Alternativ kann vorgesehen sein, dass die mehreren Rasterbauteile untereinander nicht verbunden sind, sondern nur mittels jeweiliger Verbindung zum Gehäuse der Wanddurchführung in deren Aufnahmeraum montiert sind. Dieses schließt insbesondere nicht aus, dass sich Flächen der mehreren Rasterbauteile aufeinander abstützen oder zur gegenseitigen Anlage kommen.

Auf der gegenüberliegenden Seite der Wand kann eine Abdeckung angeordnet sein. Mit der Abdeckung, zum Beispiel eine Abdeckplatte, die ein- oder mehrteilig ausgeführt ist, kann zusätzlich Druck auf die Dichtungselemente ausgeübt werden, um eine zusätzliche Dichtwirkung zu erzeugen. Die Abdeckung, beispielweise auf der einem Innenraum zugewandten Seite der Wand, deckt den Wanddurchbruch teilweise oder ganz ab, wobei die Kabel durch eine oder mehrere Öffnungen in der Abdeckplatte verlaufen. Die Abdeckplatte kann mittels einer oder mehrerer Schrauben befestigt sein.

Bei dem Raster- oder Gitterbauteil können in distalen Eckbereichen der Stege, diese ein- oder zweiseitig erfassend, Dichtabschnitte vorgesehen sein, mit denen zwischen dem Gehäuse und dem Rasterbauteil Dichtungen ausgebildet werden, wenn das Rasterbauteil im Aufnahmeraum des Gehäuses montiert ist. Die Dichtabschnitte können an dem Rasterbauteil einstückig angeformt sein. Die Dichtabschnitte können im Vergleich zu den Stegen aus einem weicheren Kunststoffmaterial bestehen. Das Rasterbauteil kann mittels Zwei-Komponenten-Spritzgießen hergestellt sein. Beim Einführen des Rasterbauteils in dem Gehäuse können die distalen Eckbereiche voranlaufen, und die Dichtabschnitte können schließlich innen am Gehäuse dichtend anliegen, wenn das Raster- oder Gitterbauteil mittels Rastelementen, die benachbart zu proximalen Eckbereichen auf einer Stegaußenseite angeordnet sein können, im Gehäuse befestigt wird. Hierbei können die Dichtabschnitte zumindest in einer eingerasteten Stellung mit einem oder beiden Dichtteilabschnitten des Dichtabschnitts innen gegen das Gehäuse oder Gehäusebauteil gedrückt sein. Die beiden Dichtteilabschnitte können über Eck in Verbindung stehen. Auf dem Dichtteilabschnitt können ein oder mehrere Dichtlippen angeordnet sein. Alternativ kann nur eine Dichtlippe vorgesehen sein, Der weitere Dichtteilabschnitt kann ergänzend eine oder mehrere Dichtlippen aufweisen oder frei hiervon sein.

Die Dichtlippen können mit weiteren Dichtlippen an den Dichtelementen fluchtend angeordnet sein, wenn die Dichtelemente in den Aufnahmen sitzen. Hierbei kann ein Formschluss vorgesehen sein. Die Dichtlippen und die weiteren Dichtlippen können mit gleicher Bauhöhe ausgeführt sein. Alternativ oder ergänzend können die Dichtlippen mit weiteren Dichtlippen einen gleichen Querschnitt aufweisen. Es kann vorgesehen sein, dass im Bereich einer vorderseitigen Stirnseite der Stege Verbindungen zwischen den Dichtabschnitten in den Eckbereichen verlaufen, woran es alternativ fehlen kann. Die Verbindungen, welche schmaler als die Dichtabschnitte ausgeführt sein können, können sich wenigstens teilweise in Vertiefungen in den Stegen erstrecken, die mit Kanälen gebildet sind. Eine solche Ausbildung kann alternativ oder ergänzend für die Dichtabschnitte vorgesehen sein. Seitliche Abschnitte der Dichtabschnitte können formschlüssig an die Dichtungselemente anschließen. Eine Oberfläche der weiteren Dichtteilabschnitte kann in einer Ebene mit einer Oberfläche der Dichtungselemente liegen. An dem weiteren Dichtteilabschnitt können seitlich ein- oder beidseitig Kragenabschnitte gebildet sein.

In Verbindung mit dem Bausatz für die Wanddurchführung sowie dem Verfahren zum Herstellen können die vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einem Wandabschnitt und einer Wanddurchführung für mehrere Kabel;
- Fig. 2: eine schematische Darstellung einer weiteren Anordnung mit einem Wandabschnitt und einer Wanddurchführung für mehrere Kabel;
- Fig. 3: eine Schnittdarstellung der Anordnung aus Fig. 1;
- Fig. 4: eine schematische Darstellung von Komponenten der Anordnung aus Fig. 1;
- Fig. 5: eine schematische Schnittdarstellung eines Abschnitts der Anordnung mit der Wanddurchführung;
- Fig. 6: eine schematische Schnittdarstellung eines weiteren Abschnitts der Wanddurchführung für mehrere Kabel;
- Fig. 7: eine perspektivische Darstellung mit einem Gehäuse und hierin aufgenommenem Rasterbauteil für eine Wanddurchführung;
- Fig. 8: eine schematische perspektivische Darstellung eines Rasterbauteils, an welchem Dichtabschnitte gebildet sind;
- Fig. 9: eine schematische perspektivische Darstellung des Rasterbauteiis aus Fig. 8, wobei in Aufnahmen Dichtungselemente angeordnet sind.
- Fig. 10: eine schematische Darstellung einer Anordnung mit einer Kabelwanddurchführung für mehrere Kabel;
- Fig. 11: eine schematische Darstellung der Anordnung aus Fig. 10 von vorn; und
- Fig. 12: eine schematische Darstellung der Anordnung aus Fig. 10 von hinten.

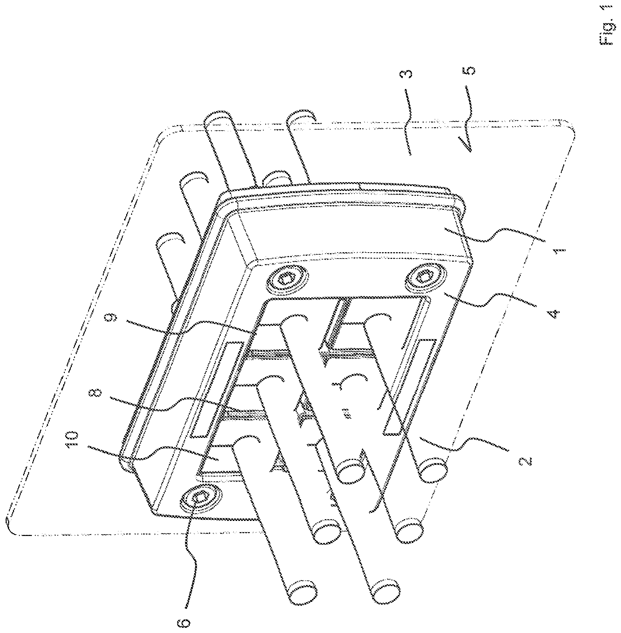

Im Folgenden werden unter Bezugnahme auf die Fig. 1 bis 7 Ausführungen für eine Kabelwandoder Wanddurchführung 1 zum gedichteten Hindurchführen von mehreren Kabeln 2 durch eine Wand 3 beschrieben, für die ein Wandabschnitt gezeigt ist. Bei der Wand 3 kann es sich beispielsweise um eine Gehäusewand eines Gerätes oder eines Schaltschranks handeln. Die Wand 3 kann zum Beispiel aus einem Blechmaterial bestehen.

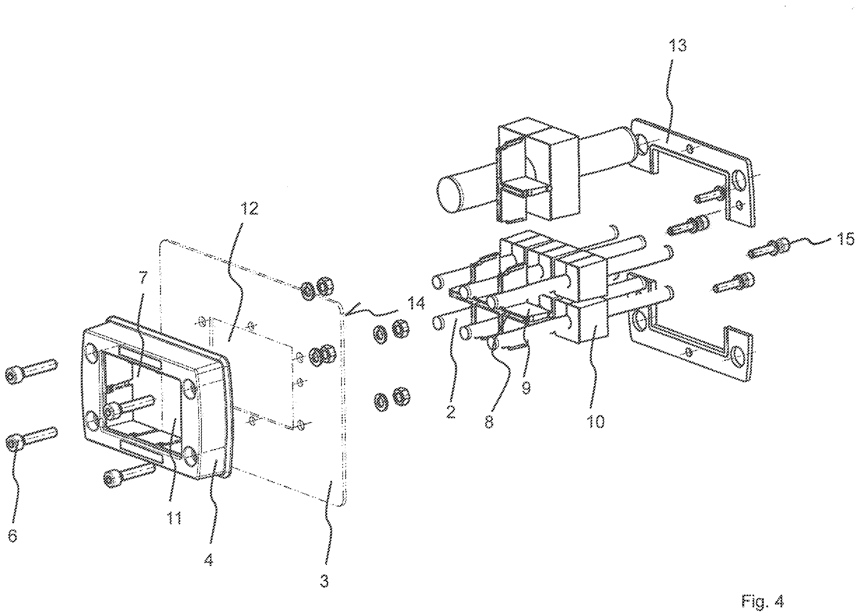

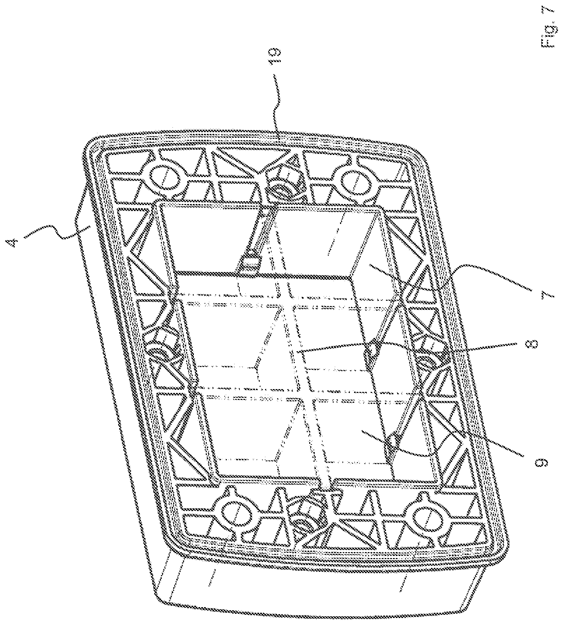

Fig. 1 zeigt eine perspektivische Darstellung einer Anordnung mit der Kabelwanddurchführung 1, die ein Gehäuse oder Gehäusebauteil 4 aufweist, welches bei der dargestellten Ausführungsform einteilig aus einem Kunststoffmaterial hergestellt ist, beispielsweise als Spritzgussbauteil. Das Gehäusebauteil 4 ist auf einer Seite 5 der Wand 3 befestigt, beispielweise mittels Schrauben 6. Das Gehäusebauteil 4 ist auf die Wand 3 aufgesetzt und stellt im Inneren einen Aufnahmeraum 7 zur Verfügung (vgl. insbesondere Fig. 4 und 7 unten). In dem Aufnahmeraum 7 ist ein Rasterbauteil 8 angeordnet. Das Rasterbauteil 8 stellt bei der gezeigten Ausführung mehrere Aufnahmen 9 zur Verfügung, in denen jeweils ein Dichtungselement 10 mit einem der mehreren Kabel 2 angeordnet ist. Das Dichtungselement 10 dichtet das jeweilige Kabel umlaufend ab, insbesondere gegen Feuchtigkeits- und Schmutzeintritt.

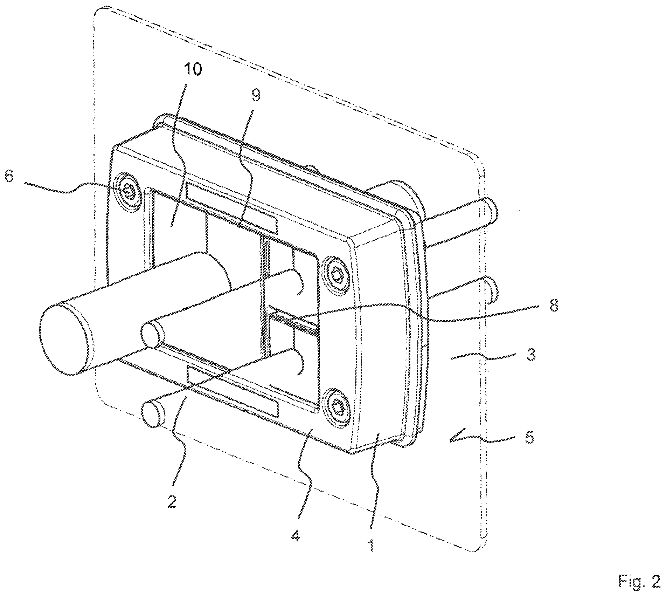

Fig. 2 zeigt eine perspektivische Darstellung einer weiteren Anordnung mit der Kabelwanddurchführung 1 in einer anderen Ausgestaltung. Das Rasterbauteil 8 stellt in dem Aufnahmeraum 7 des Gehäusebauteils 4 eine andere Aufteilung oder Einteilung der Aufnahmen 9 zur Verfügung.

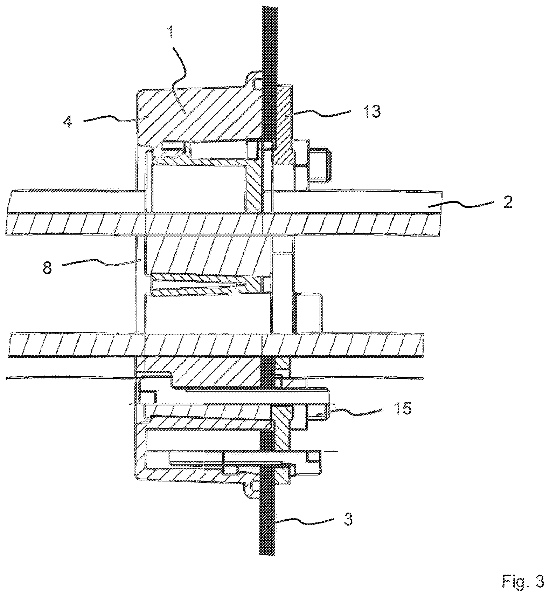

Fig. 3 zeigt eine Schnittdarstellung durch die Anordnung in Fig. 1.

Fig. 4 zeigt eine Explosionsdarstellung der Anordnung mit der Wanddurchführung 1 in der Ausgestaltung nach Fig. 1.

Insbesondere aus Fig. 4 ergibt sich, dass das Rasterbauteil 8 in dem Aufnahmeraum 7 des Gehäusebauteils 4 einführbar ist, nachdem das Gehäusebauteil 4 auf der Seite 5 der Wand 3 mittels der Schrauben 6 befestigt ist. Mit Hilfe der Befestigung des Gehäusebauteils 4 wird ein Gehäusedurchbruch 11 einem Wanddurchbruch 12 gegenüberliegend angeordnet, so dass die beiden Durchbrüche wenigstens teilweise flächig überlappen. Durch den Wanddurchbruch 12 kann dann das Rasterbauteil 8 in dem Aufnahmeraum 7 eingeführt werden, um dort die Aufnahmen 9 bereitzustellen, in die dann die Dichtungselemente 10 mit dem jeweiligen Kabel eingesteckt werden. Bei der gezeigten Ausführungsform ist eine Abdeckung 13 auf einer gegenüberliegenden Seite 14 der Wand 3 vorgesehen, die ebenfalls mittels Schrauben 15 an der Wand 3 befestigt wird.

Bei der Kabelwanddurchführung 1 ist es im Prozess der Montage somit ermöglicht, zunächst das Gehäuse 4 auf der Seite 5 der Wand 3 zu montieren, um dann durch die noch großflächige Öffnung des Wanddurchbruchs 12 und des Gehäusedurchbruchs 11 hindurch bestückte Kabelenden der mehreren Kabel 2 hindurchzuführen. Im Anschluss kann das Rasterbauteil 8 durch den Wanddurchbruch 12 hindurch in dem Aufnahmeraum 7 montiert werden, um schließlich die Dichtungselemente 10 in die Aufnahmen 9 einzustecken.

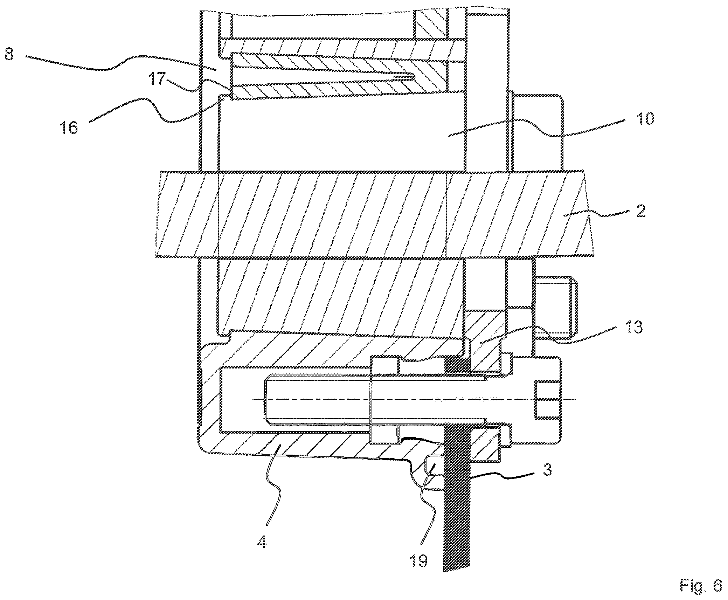

Die Dichtungselemente 10 sind bei der gezeigten Ausführungsform selbsttätig klemmend in den Aufnahmen 9, wenn die Dichtungselemente 10 hierin eingeführt werden. Hierzu sind die Aufnahmen 9 konisch ausgeführt, was sich insbesondere aus Fig. 6 ergibt. Alternativ oder ergänzend können die Dichtungselemente 10 eine konische Außenform aufweisen. Aus Fig. 6 ergibt sich weiterhin, dass an den Dichtungselementen 10 eine randseitige Dichtlippe 16 gebildet ist, die auf einer Stirnfläche 17 des Rasterbauteils 8 aufliegt.

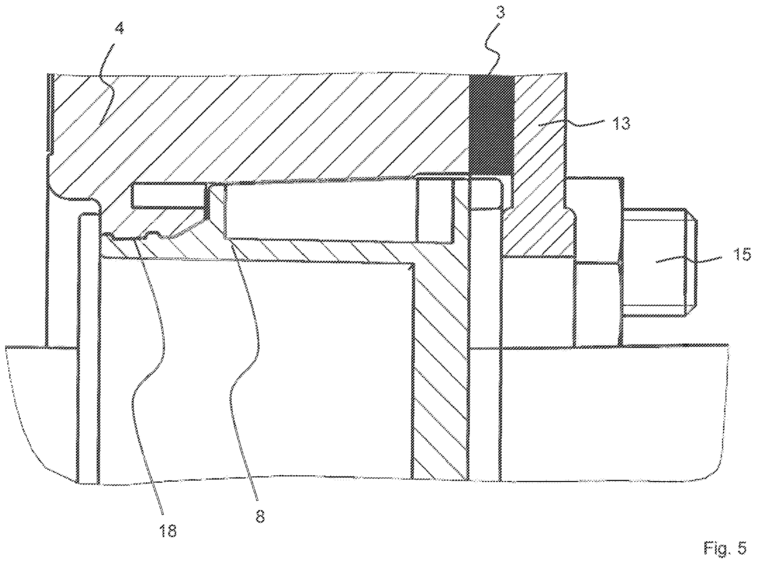

Fig. 5 zeigt eine schematische Querschnittsdarstellung eines Abschnitts der Anordnung mit der Kabelwanddurchführung 1. Insbesondere ergibt sich, dass das Rasterbauteil 8, welches in der gezeigten Ausführungsform als ein Einsatzrahmen ausgebildet ist, mittels einer Rastverbindung 18 an dem Gehäusebauteil 4 montiert ist.

Fig. 7 zeigt eine perspektivische Darstellung, bei der das Rasterbauteil 8 in das Gehäusebauteil 4 eingesetzt ist. Umlaufend ist eine Dichtlippe 19 an dem Gehäusebauteil 4 vorgesehen.

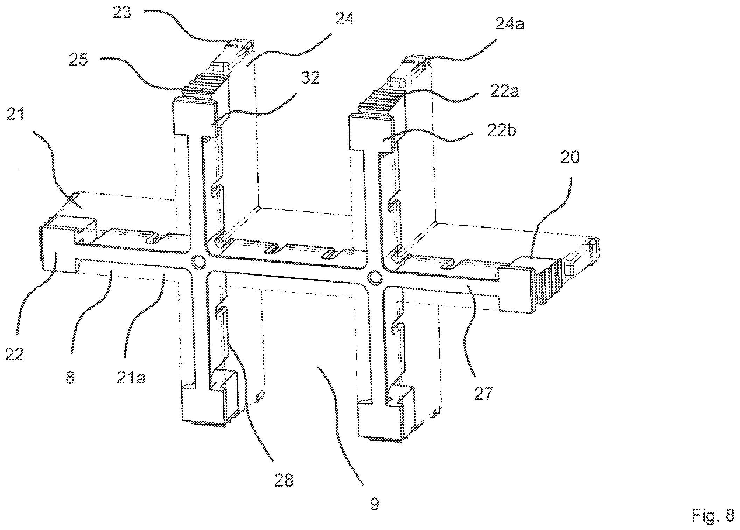

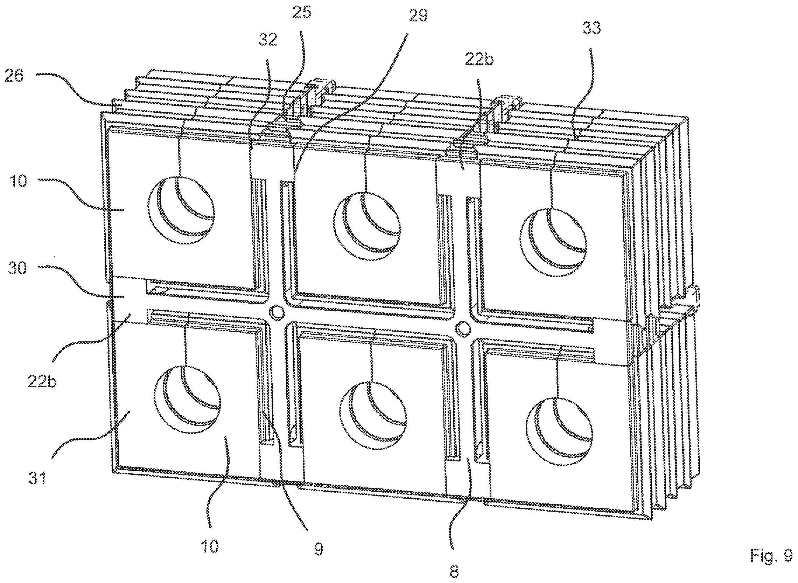

Fig. 8 und 9 zeigen schematische perspektivische Darstellungen einer weiteren Ausführung für das Rasterbauteil 8. In Fig. 9 sind in den Aufnahmen 9 die Dichtungselemente 10 angeordnet sind.

In distalen Eckbereichen 20 von Stegen 21 des Rasterbauteils 8 sind Dichtabschnitte 22 gebildet. Die Dichtabschnitte 22 bestehen im Vergleich zu den Stegen 21 aus einem weicheren Kunststoffmaterial, zum Beispiel einem auf Druckbelastung elastisch nachgebenden Kunststoffmaterial. Das Rasterbauteil 8 kann mittels 2-Komponenten-Spritzgießen hergestellt werden.

Beim Einführen des Rasterbauteils in dem Gehäusebauteil 4 laufen die distalen Eckbereiche 20 voran und die Dichtabschnitte 22 liegen schließlich ganz oder teilweise innen am Gehäusebauteil 4 dichtend an, wenn das Raster- oder Gitterbauteil 8 mittels Rastelementen 23, die benachbart zu proximalen Eckbereichen 24 auf einer Stegaußenseite 24a angeordnet sind, im Gehäuse 4 und / oder am Wanddurchbruch befestigt werden kann. Hierbei können die Dichtabschnitte 22 zumindest in einer eingeführten Stellung mit einem oder beiden Dichtteilabschnitten 22a, 22b des Dichtabschnitts 22 innen gegen das Gehäusebauteil 4 gedrückt sein. Auf dem Dichtteilabschnitt 22a sind Dichtlippen 25 angeordnet. Alternativ kann nur eine Dichtlippe vorgesehen sein. Der weitere Dichtteilabschnitt 22b, welcher in einer alternativen Ausführung auch entfallen kann, kann ergänzend eine oder mehrere Dichtlippen (nicht dargestellt) aufweisen oder frei hiervon sein (vgl. Fig. 8).

Gemäß der Darstellung in Fig. 9 können die Dichtlippen 25 mit weiteren Dichtlippen 26 an den Dichtelementen 10 fluchtend angeordnet sein, wenn die Dichtelemente 10 in den Aufnahmen 9 sitzen. Hierbei kann ein Formschluss vorgesehen sein. Die Dichtlippen 25 und die weiteren Dichtlippen 26 können mit gleicher Bauhöhe ausgeführt sein. Alternativ oder ergänzend können die Dichtlippen 25 und die weiteren Dichtlippen 26 einen gleichen Querschnitt aufweisen.

Es kann vorgesehen sein, wie dies Fig. 8 und 9 beispielhaft zeigen, dass im Bereich einer vorderseitigen Stirnseite 21a der Stege 21 Verbindungen 27 zwischen den Dichtabschnitte 22 in den distalen Eckbereichen 20 verlaufen, woran es alternativ fehlen kann. Bei der gezeigten Ausführungsform erstrecken sich die Verbindungen 27 in Vertiefungen 28 in den Stegen 21, die mit Kanälen gebildet sein können, derart, dass das Material, aus denen die Verbindungen 27 hergestellt werden, von der vorderseitigen Stirnseite 21 a in die Vertiefungen 28 gelangen kann.

Gemäß Fig. 9 schließen bei der gezeigten Ausführungsform seitliche Abschnitte 29 der Dichtabschnitte 22 formschlüssig an die Dichtungselemente 10 an. Eine Oberfläche 30 der weiteren Dichtteilabschnitt 22b kann in einer Ebene mit einer Oberfläche 31 der Dichtungselemente 10 liegen, was Fig. 9 zeigt. An dem weiteren Dichtteilabschnitt 22b sind seitlich Kragenabschnitte 32 gebildet.

Die Dichtungselemente 10 weisen einen Schnitt 33 auf, welcher das Öffnen, Aufweiten oder Aufspreizen der Dichtungselemente 10 ermöglicht, zum Beispiel beim Einführen eines Kabels,

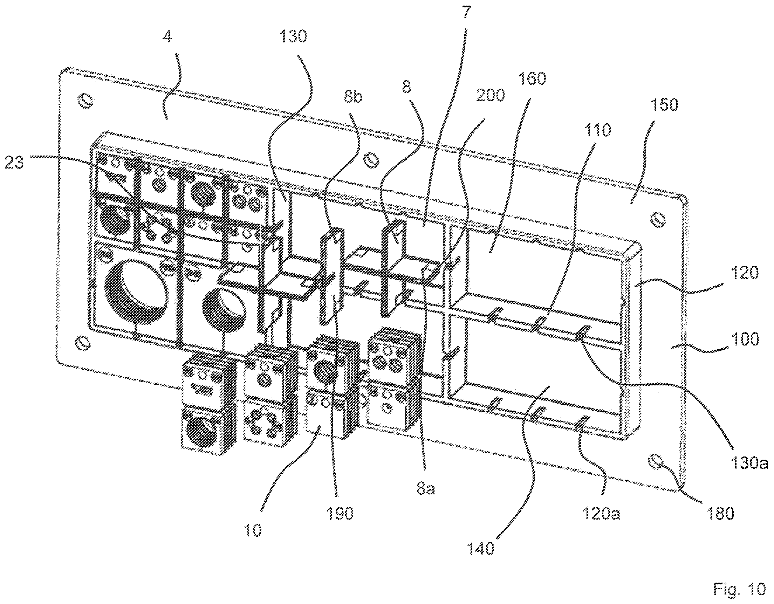

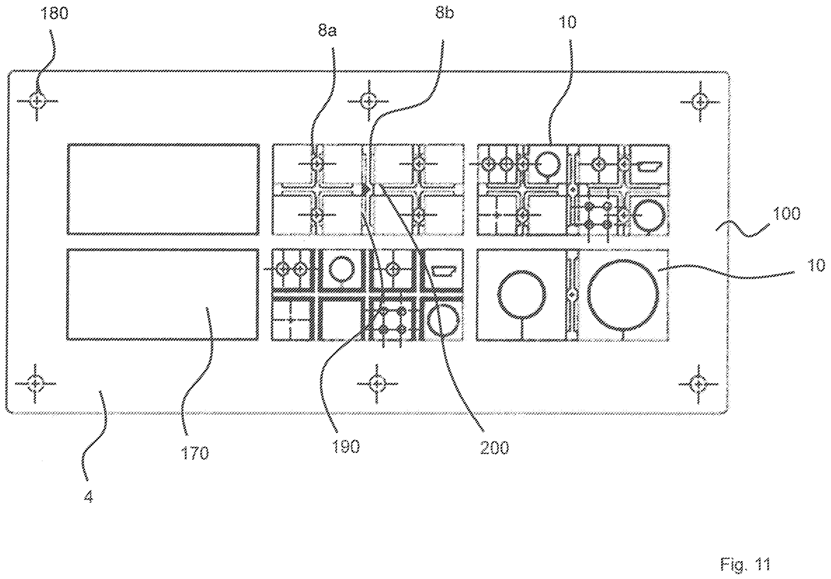

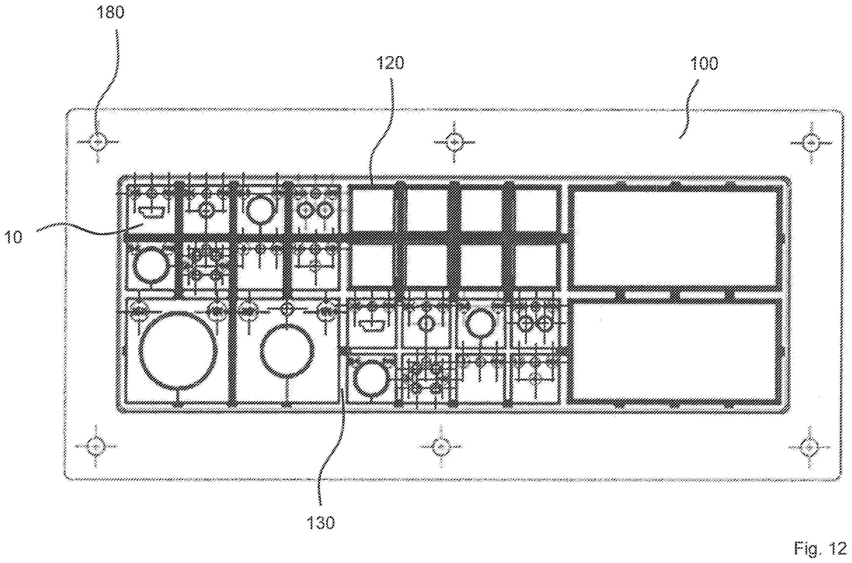

Die Fig. 10 bis 12 zeigen schematische Darstellungen einer Anordnung mit einer weiteren Kabelwanddurchführung. Für gleiche Merkmale werden in den Fig. 10 bis 12 dieselben Bezugszeichen wie in den vorangehenden Figuren verwendet. Fig. 11 zeigt die Anordnung aus Fig. 10 von vorn, also von einer nach einem Gehäuseeinbau vom Gehäuse abgewandten Seite, wohingegen Fig. 12 die Anordnung von hinten zeigt.

Das Gehäuse oder Gehäusebauteil 4 ist mit einer Flanschplatte 100 ausgeführt, an der rückseitig Stege 110 angeordnet sind, die einen Randsteg 120 sowie Zwischenstege 130 aufweisen. Der Randsteg 120 verläuft um eine Ausnehmung 140, mit der der Aufnahmeraum 7 gebildet ist. Der Randsteg 120 ist vorstehend auf einer Gehäusemontageoberfläche 150 des Gehäusebauteils 4 gebildet. Bei der gezeigten Ausführungsform ist der Randsteg 120 umlaufend durchgehend ausgeführt.

Mithilfe der Zwischenstege 130 sind mehrere Öffnungen 160 bereitgestellt, von denen ein Teil mit einem Verschlussbauteil 170 bedeckt ist, welches über Sollbruchstellen an den Zwischenstegen 130 und an dem Gehäusebauteil 4 angeordnet ist, derart, dass das Verschlussbauteil 170 beim Ausbilden einer Wanddurchführung für Kabel entfernt werden kann, um so die zugeordnete Öffnung freizugeben, so dass Rasterbauteile 8 und Dichtungselemente 10 hierin eingeführt werden können.

Bei der gezeigten Ausführungsform weisen der Randsteg 120 und die Zwischenstege 130 die gleiche Steghöhe sowie die gleiche Stegwanddicke auf.

Die Flanschplatte 100 weist Bohrungen 180 auf, die beim Montieren an der Gehäusewand zum Aufnehmen von Befestigungsmitteln (nicht dargestellt) dienen, beispielweise Schrauben oder Niete.

Gemäß der Darstellung in Fig. 11 weisen die Rasterbauteile 8 gekreuzte und nicht gekreuzte Rasterbauteile 8a, 8b auf, für die die oben in Verbindung mit den Rasterbauteilen 8 ausgeführten Erläuterungen zu alternativen Ausgestaltungen entsprechend gelten. Aufnahmen 120a, 130a an dem Randsteg 120 und den Zwischenstegen 130 wirken mit den Rastelementen 23 an den Rasterbauteilen zusammen, wie dies oben beschrieben wurde.

Beim Einbau kommen einander zugeordnete Oberflächen 190, 200 der gekreuzten und der nicht gekreuzten Rasterbauteile 8a, 8b dichtend zur Auflage, wobei die hierbei ausgebildete Dichtung vergleichbar der Ausbildung der dichtenden Verbindung zwischen dem Gehäusebauteil 4 und dem Rasterbauteil 8 hergestellt wird.

## Patentansprüche

1. Kabelwanddurchführung, mit
- einem Gehäusebauteil (4), welches an einer Gehäusewand im Bereich eines Wanddurchbruchs montierbar ist und eine Ausnehmung (140) zum Hindurchführen von Kabeln durch das Gehäusebauteil (4) aufweist; und
- Stegen (110), die einstückig an dem Gehäusebauteil (4) angeformt und mit denen in der Ausnehmung (140) mehrere mittels der Stege (110) getrennte Öffnungen (160) gebildet sind, wobei die Öffnungen (160) eingerichtet sind, jeweils ein oder mehrere Dichtungselemente (10) aufzunehmen, mit denen eine Kabeldurchführung für wenigstens eines der Kabel hergestellt ist,
**gekennzeichnet durch** ein Verschlussbauteil (170), welches zumindest eine der Öffnungen (160) verschließt und über eine oder mehrere Sollbruchstellen an dem Gehäusebauteil (4) und / oder den Stegen (110) angeordnet ist, wobei das Verschlussbauteil (170) mittels Trennen der einen oder der mehreren Sollbruchstellen zum Freigeben der zumindest einen Öffnung (160) vom Gehäusebauteil (4) und / oder den Stegen (110) gelöst werden kann.

2. Kabelwanddurchführung nach Anspruch 1, **dadurch gekennzeichnet, dass** das Verschlussbauteil (170) mehrstückig mit mehreren Teilverschlussbauteilen gebildet ist, die über zugeordnete Sollbruchstellen verbunden sind und jeweils einen Teilbereich der zumindest einen Öffnungen (160) verschließen.

3. Kabelwanddurchführung nach Anspruch 1 oder 2, **dadurch gekennzeichnet, dass** das Verschlussbauteil (170) als eine Verschlussplatte ausgeführt ist.

4. Kabelwanddurchführung nach mindestens einem der vorangehenden Ansprüche, **dadurch gekennzeichnet, dass** die mehreren Sollbruchstellen entlang eines umlaufenden Rands des Verschlussbauteils (170) verteilt angeordnet sind.

5. Kabelwanddurchführung nach mindestens einem der vorangehenden Ansprüche, **dadurch gekennzeichnet, dass** das Gehäusebauteil (4) mit einer Flanschplatte (100) gebildet ist, welche um die Ausnehmung (140) herum gebildet ist.

6. Kabelwanddurchführung nach mindestens einem der vorangehenden Ansprüche, **dadurch gekennzeichnet, dass** die Stege (110) einen Randsteg (120) aufweisen, welcher um die Ausnehmung (140) umlaufend gebildet ist.

7. Kabelwanddurchführung nach mindestens einem der vorangehenden Ansprüche, **dadurch gekennzeichnet, dass** die Stege (110) Zwischenstege (130) aufweisen, welche zum Ausbilden der Öffnungen (160) innerhalb der Ausnehmung (140) angeordnet sind.

8. Kabelwanddurchführung nach mindestens einem der vorangehenden Ansprüche, **dadurch gekennzeichnet, dass** zumindest ein Teil der Stege (110) von einer Gehäusemontageoberfläche des Gehäusebauteils (4) vorstehend ausgebildet ist.

9. Kabelwanddurchführung nach mindestens einem der vorangehenden Ansprüche, **dadurch gekennzeichnet, dass** die Stege (110) Montageaufnahmen (120a; 130a) aufweisen, die eingerichtet sind, ein oder mehrere Rasterbauteile (8) für eine Montage in einer zugeordneten Öffnung (160) aufzunehmen, um in der zugeordneten Öffnung getrennte Aufnahmen für Dichtungselemente (10) auszubilden.

10. Kabelwanddurchführung nach mindestens einem der vorangehenden Ansprüche, **dadurch gekennzeichnet, dass** in einer Öffnung mehrere Rasterbauteile (8a, 8b) angeordnet sind, bei denen einander zugeordnete Oberflächenabschnitte (190, 200) benachbarter Rasterbauteile dichtend aufeinanderliegen.

11. Kabelwanddurchführung nach Anspruch 10, **dadurch gekennzeichnet, dass** bei den mehreren Rasterbauteilen (8a, 8b) eine Stirnfläche eines Teilstegs eines der Rasterbauteile dichtend auf einer Seitenfläche eines Teilstegs eines benachbarten Rasterbauteils angeordnet ist.

12. Kabelwanddurchführung nach Anspruch 10 oder 11, **dadurch gekennzeichnet, dass** die Rasterbauteile gekreuzte und / oder nicht gekreuzte Rasterbauteile (8a, 8b) aufweisen.

13. Bausatz für eine Wanddurchführung von Kabeln, mit
- einer Kabelwanddurchführung nach mindestens einem der vorangehenden Ansprüche;
- einem oder mehreren Rasterbauteilen (8), die eingerichtet sind, in einer Öffnung (160) einer Ausnehmung (140) eines Gehäusebauteils (4) der Kabelwanddurchführung angeordnet zu werden, um in der zugeordneten Öffnung (160) getrennte Aufnahmen für Dichtungselemente (10) auszubilden; und
- einem oder mehreren Dichtungselementen (10), mit denen eine Kabeldurchführung für wenigstens eines der Kabel herstellbar ist.

## Claims

1. A cable wall pass-through, with
- a housing component (4) which can be mounted at a housing wall in the area of a wall aperture and which has a recess (140) for guiding cables through the housing member (4); and
- bridges (110) which are formed integrally at the housing component (4) and with which a plurality of openings (160) separated by means of the bridges (110) are formed in the recess (140), wherein the openings (160) are configured to respectively receive one or more sealing elements (10) with which a cable pass-through for at least one of the cables is provided,
**characterized by** a closure component (170) which closes at least one of the openings (160) and is arranged via one or more predetermined breaking points on the housing component (4) and/or the bridges (110), wherein the closure component (170) can be detached from the housing component (4) and/or the bridges (110) by separating the one or more predetermined breaking points in order to uncover the at least one opening (160).

2. The cable wall pass-through according to claim 1, **characterized in that** the closure component (170) consists of a plurality of pieces with a plurality of closure subcomponents which are connected via associated predetermined breaking points and which respectively close a subarea of the at least one opening (160).

3. The cable wall pass-through according to claim 1 or 2, **characterized in that** the closure component (170) is realized as a closure plate.

4. The cable wall pass-through according to at least one of the preceding claims, **characterized in that** the plurality of predetermined breaking points are arranged so as to be distributed along a circumferential edge of the closure component (170).

5. The cable wall pass-through according to at least one of the preceding claims, **characterized in that** the housing component (4) is formed with a flange plate (100) formed around the recess (140).

6. The cable wall pass-through according to at least one of the preceding claims, **characterized in that** the bridges (110) comprise an edge bridge (120) formed circumferentially around the recess (140).

7. The cable wall pass-through according to at least one of the preceding claims, **characterized in that** the bridges (110) comprise intermediate bridges (130) arranged to form the openings (160) within the recess (140).

8. The cable wall pass-through according to at least one of the preceding claims, **characterized in that** at least a part of the bridges (110) is designed so as to protrude from a housing mounting surface of the housing component (4).

9. The cable wall pass-through according to at least one of the preceding claims, **characterized in that** the bridges (110) comprise mounting spaces (120a; 130a) configured to receive one or more grid components (8) for mounting in an associated opening (160) in order to form separate spaces for sealing elements (10) in the associated opening.

10. The cable wall pass-through according to at least one of the preceding claims, **characterized in that** a plurality of grid components (8a, 8b) is arranged in an opening, wherein associated surface segments (190, 200) of adjacent grid components lie on top of one another in a sealing manner.

11. The cable wall pass-through according to claim 10, **characterized in that**, with respect to the plurality of grid components (8a, 8b), an end surface of a sub-bridge of one of the grid components is arranged in a sealing manner on an end surface of a sub-bridge of an adjacent grid component.

12. The cable wall pass-through according to claim 10 or 11, **characterized in that** the grid components comprise crossing and/or non-crossing grid components (8a, 8b).

13. A kit for a wall pass-through for cables, with
- a cable wall pass-through according to at least one of the preceding claims;
- one or more grid components (8) which are configured to be arranged in an opening (160) of a recess (140) of a housing component (4) of the cable wall pass-through in order to form separate spaces for sealing elements (10) in the associated opening (160); and
- one or more sealing elements (10) with which a cable pass-through for at least one of the cables can be provided.

## Revendications

1. Passage mural pour câbles avec
- un élément constitutif de boîtier (4), lequel peut être monté sur une paroi de boîtier dans la zone d'une traversée murale et comporte un évidement (140) pour faire passer des câbles à travers l'élément constitutif de boîtier (4), et
- des moulures (110), qui sont conformées en une pièce sur l'élément constitutif de boîtier (4) et avec lesquelles sont formées plusieurs ouvertures (160) séparées au moyen des moulures (110) dans l'évidement (140), sachant que les ouvertures (160) sont agencées pour loger respectivement un ou plusieurs éléments d'étanchéité (10) avec lesquels est réalisé un passage de câbles pour au moins un des câbles.
**caractérisé par** un élément de fermeture (170), lequel ferme au moins une des ouvertures (160) et un ou plusieurs points de rupture sont situés sur l'élément constitutif de boîtier (4) et/ou les moulures (110), sachant que l'élément de fermeture (170) peut être desserré au moyen de la séparation d'un ou de plusieurs points de rupture pour libérer au moins une ouverture (160) de l'élément constitutif de boîtier (4) et/ou de moulures (110).

2. Passage mural pour câbles selon la revendication 1, **caractérisé en ce que** l'élément de fermeture (170) est formé en plusieurs pièces avec plusieurs parties d'élément de fermeture, qui sont reliées par des points de rupture attribués et ferment respectivement une partie de zone d'au moins une des ouvertures (160).

3. Passage mural pour câbles selon la revendication 1 ou 2, **caractérisé en ce que** l'élément de fermeture (170) est exécuté sous la forme d'une plaque de fermeture.

4. Passage mural pour câbles selon au moins l'une quelconque des revendications précédentes, **caractérisé en ce que** les multiples points de rupture sont disposés répartis le long d'un bord périphérique de l'élément de fermeture (170).

5. Passage mural pour câbles selon au moins l'une quelconque des revendications précédentes, **caractérisé en ce que** l'élément constitutif de boîtier (4) est formé avec une plaque de bridage (100), laquelle est formée autour de l'évidement (140).

6. Passage mural pour câbles selon au moins l'une quelconque des revendications précédentes, **caractérisé en ce que** les moulures (110) comportent une moulure de bordure (120), laquelle est formée entourant l'évidement (140).

7. Passage mural pour câbles selon au moins l'une quelconque des revendications précédentes, **caractérisé en ce que** les moulures (110) comportent des moulures intermédiaires (130), lesquelles sont disposées pour constituer les ouvertures (160) à l'intérieur de l'évidement (140).

8. Passage mural pour câbles selon au moins l'une quelconque des revendications précédentes, **caractérisé en ce qu'**au moins une partie des moulures (110) est constituée dépassant d'une surface de montage du boîtier de l'élément constitutif de boîtier (4).

9. Passage mural pour câbles selon au moins l'une quelconque des revendications précédentes, **caractérisé en ce que** les moulures (110) comportent des logements de montage (120a, 130a), qui sont agencés pour loger un ou plusieurs composants encliquetables (8) pour un montage dans une ouverture attribuée (160) pour constituer des logements séparés dans l'ouverture attribuée pour les éléments d'étanchéité (10).

10. Passage mural pour câbles selon au moins l'une quelconque des revendications précédentes, **caractérisé en ce que** plusieurs composants encliquetables (8a, 8b) sont disposés dans une ouverture, pour lesquels des sections de surface (190, 200) des composants encliquetables attribuées les unes aux autres sont posées l'une sur l'autre de façon hermétique.

11. Passage mural pour câbles selon la revendication 10, **caractérisé en ce que** pour les nombreux composants encliquetables (8a, 8b), une surface frontale d'une partie de nervure d'un des composants encliquetables est disposée de façon hermétique sur une surface frontale d'une partie de nervure d'un composant encliquetable voisin.

12. Passage mural pour câbles selon la revendication 10 ou 11, **caractérisé en ce que** les composants encliquetables comportent des composants encliquetables croisés et/ou non croisés (8a, 8b).

13. Kit pour un passage mural pour câbles, avec :
- un passage mural pour câbles selon au moins l'une quelconque des revendications précédentes,
- un ou plusieurs composants encliquetables (8), qui sont agencés pour être disposés dans une ouverture (160) d'un évidement (140) d'un élément constitutif de boîtier (4) du passage mural pour câbles pour constituer dans l'ouverture attribuée (160) des logements séparés pour des éléments d'étanchéité (10), et
- un ou plusieurs éléments d'étanchéité (10) avec lesquels il est possible de réaliser un passage mural pour au moins un des câbles.
